# EUROPÄISCHE PATENTSCHRIFT

(11) **EP 1 096 240 B1**
(45) Veröffentlichungstag und Bekanntmachung des Hinweises auf die Patenterteilung: **27.02.2008**
(21) Anmeldenummer: 00120731.5
(22) Anmeldetag: 22.09.2000
(51) Int. Cl.: G01J 5/10, C09D 183/14

(54) **Infrarotabsorber und damit hergestellter thermischer Sensor**
Infrared absorber and thermal sensor comprising same
Absorbeur d'infrarouge et capteur thermique l'incorporant

(30) Priorität: 29.10.1999 DE 19952126
(43) Veröffentlichungstag der Anmeldung: 02.05.2001
(73) Patentinhaber: ROBERT BOSCH GMBH, 70442 Stuttgart (DE)
(72) Erfinder: Pannek, Thorsten, 70176 Stuttgart (DE); Frey, Wilhelm, Palo Alto 94304 (US)

(56) Entgegenhaltungen:
- EP-A- 0 815 952
- DE-A- 4 221 037
- PATENT ABSTRACTS OF JAPAN vol. 013, no. 313 (C-618), 17. Juli 1989 (1989-07-17) -& JP 01 096280 A (KANSAI PAINT CO LTD), 14. April 1989 (1989-04-14)
- PATENT ABSTRACTS OF JAPAN vol. 016, no. 489 (P-1433), 9. Oktober 1992 (1992-10-09) -& JP 04 174403 A (NIHON HIKIYUUMEN RENZU KK), 22. Juni 1992 (1992-06-22)
- PATENT ABSTRACTS OF JAPAN Bd. 016, Nr. 097 (E-1176), & JP 03 276676 A (NEC CORP),
- PATENT ABSTRACTS OF JAPAN Bd. 018, Nr. 615 (C-1277), & JP 06 235069 A (KIMINORI ITO),

## Beschreibung

### Stand der Technik

Die Erfindung betrifft einen Infrarotabsorber, insbesondere für thermische Sensoren, der in Form einer Schicht aus einer oder mehreren organischen und/oder anorganischen Verbindungen über einer auf oder in einem Substrat liegenden thermosensitiven Struktur aufgebracht ist, um einfallende Infrarotstrahlung in Wärme umzusetzen.

Viele kommerziell erhältliche integrierte Infrarotstrahlungssensoren beruhen auf dem Prinzip der Umwandlung von Strahlung in Wärme, die thermoelektrisch oder aufgrund einer Widerstandsveränderung einer thermosensitiven Schicht gemessen wird, wie z. B. Thermoelemente, Bolometer, Thermosäulen usw. Grundvoraussetzung für eine hohe Empfindlichkeit eines solchen Sensors ist eine möglichst effiziente Umsetzung der Infrarotstrahlung bestimmter Wellenlängenbereiche in Wärme. Als Beispiel sei z. B. die sensorische Erfassung menschlicher Wärmestrahlung im Wellenlängenbereich von 2-14 µm genannt.

Als eine einfache und kostengünstige Alternative zu herkömmlichen Absorberschichten, wie z. B. schwarz gefärbtes Gold oder strukturierten Mehrschichtsystemen, bieten sich leicht modifizierbare und einfach zu strukturierende organisch/anorganische Polymere an. Die Verwendung organisch/anorganischer Verbindungen für den genannten Zweck ist bereits bekannt. Sie werden z. B. bei einem thermischen Sensor der Firma Heimann als Absorberschicht eingesetzt. Diese Absorberschicht besteht aus einem organischen Ester, der Art Isophtalsäurealkyd mit Anteilen Polystyrol. Durch Zugabe von Kohlenstoff in fester Form wird die Oberfläche stark aufgerauht, wodurch es zu einer stark inhomogenen Schichtbedeckung kommt.

Ebenfalls bekannt sind aus Fotoresist bestehende Absorberschichten, welche Zusätze von Metalloxid oder Kohlenstoff (DE 4221037) bzw. einem Farbstoff (JP03276676) enthalten.

Eine Gruppe kommerziell erhältlicher organisch/anor ganischer Verbindungen stellen die ORMOCERE der FhG-ISC dar, die derzeit Anwendung besonders in der Faseroptik finden. Anorganische oxidische Gruppen werden dabei durch eine Kombination aus Polykondensationsprozessen (Sol-Gel-Synthese) und Vernetzungsreaktionen (Crosslinking) mit funktionellen organischen Gruppen gekoppelt. Zur späteren UV-Strukturisierung wird ein Photostarter beigefügt.

Ein weiteres Material, das im spektralen Bereich von 8-10 µm starke Absorptionsbanden aufweist, ist Si0₂.

### Aufgabe und Vorteile der Erfindung

Aufgabe der Erfindung ist es, einen insbesondere für den Bau thermischer Sensoren geeigneten Infrarotabsorber sowie einen damit hergestellten thermischen Sensor zu ermöglichen, der eine Einstellung der optischen Eigenschaften des Absorbers über einen weiten Bereich durch einfache Maßnahmen, eine möglichst geringe thermische Belastung der darunter liegenden Schichten, eine gute Haftung zu vielen Substraten und einen einfachen und kostengünstigen Herstellungsprozess ermöglicht, bei dem eine Verarbeitung und Strukturierung durch Standardprozesse möglich ist.

Die obige Aufgabe beispielsweise dadurch gelöst, dass die Absorberschicht als wesentlichen Bestandteil ein ORMOCER aufweist. Solche ORMOCERE sind bereits vollständig synthetisiert und als liquide Verbindungen erhältlich. Basis für ORMOCERE sind katalysierte Alkoxisilane, das sind anorganische oxidische Gruppen, Ethoxi-, Methoxicilane. Diese bestehen aus Si-0- und Estergruppen, deren Banden bereits Strahlung in den Wellenlängenbereichen 5,5-6, 8-10 und 10-13 µm absorbieren. Durch Synthetisieren der Alkoxisilane mit fluorierten Aromaten (organische Gruppen) wird die Absorption im Bereich von 8-10 µm verstärkt. Darüber hinaus kommen weitere Banden der Aromaten hinzu, die Infrarotstrahlung in den Bereichen 3,2-3,6; 6 und 13-14 µm absorbieren.

Eine solche, ein ORMOCER als wesentlichen Bestandteil aufweisende Absorberschicht kann zusätzlich mit organischen und/oder anorganischen Komponenten modifiziert werden, um sie einem optimalen Einsatz als Absorberschicht anzupassen. Eine derartige Absorber schicht wird in EP 0815952 beschrieben.

Zur weiteren Erhöhung der Absorption wird ein dunkler, opaker Farbstoff eingebracht. Weiter können Pigmente zur Steigerung der Porösität und der damit verbundenen Erhöhung des Absorbtionskomponenten in die Absorberschicht eingebracht werden.

Außerdem kann der Absorptionskoeffizient noch durch Modifikation der anorganischen oxidischen Gruppen durch andersartige organische Komponenten gesteigert werden.

Die Weiterverarbeitung dieser Verbindungen geschieht durch Standardprozesse. Anorganisch/organische Polymere sind vor der endgültigen Vernetzung liquide Medien von hoher Viskosität und werden durch ein "Spincoating" genanntes Verfahren auf ein Substrat aufgeschleudert. Dies ermöglicht eine homogene Schichtbedeckung und führt dadurch zu einer sehr guten Wärmeverteilung. ORMOCERE zeigen im allgemeinen eine bessere thermische Stabilität (bis etwa 250° C) als Lacke (z. B. PMMA) und sind damit für thermische Anwendung besser geeignet als Lacke.

Somit bietet ein mit einer Absorberschicht, die als wesentlichen Bestandteil ein ORMOCER aufweist, welches gegebenenfalls mit organischen und/oder anorganischen Komponenten modifiziert ist, aufgebauter thermischer Sensor folgende Vorteile:
- einfacher und kostengünstiger Herstellungsprozess;
- Verarbeitung und Strukturierung durch Standardprozesse;
- die Eigenschaften, insbesondere optischen Eigenschaften der Schicht sind einfach einstellbar;
- die Absorberschicht weist eine gute Haftung zu vielen Substraten auf;
- die Absorberschicht hat eine bessere thermische Stabilität als viele Lacke;
- die Absorberschicht bildet einen elektrischen Isolator, so dass keine elektrische Isolation zwischen Absorber und thermosensitiven Elementen notwendig ist;
- die Absorberschicht weist ein breites Absorptionsspektrum mit hohen Absorptionskoeffizienten auf;
- bei der Absorberschicht sind geringe wie hohe Schichtdicken mit Aspektverhältnissen bis zu 4 möglich;
- da die Prozesstemperaturen im Bereich um 100° C liegen, werden die darunterliegenden Schichten nur geringfügig thermisch belastet;
Schließlich ist ein weiterer Einsatz einer ORMOCER enthaltenden Absorberschicht als Infrarotfilter oder als optische Schutzschicht möglich.

Eine alternative Lösung der obigen Aufgabe ist gemäß der Erfindung dadurch gekennzeichnet, dass die Absorberschicht aus einem Fotoresist besteht, der in einer Suspension mit Silikaten vorliegt und mit einem dunklen Farbstoff zur Erzeugung einer lichtundurchlässigen Absorberschicht dotiert ist.

Silikate geringer Korngröße, wie einige 100 nm, die durch Sol-Gel-Synthese hergestellt werden, werden dem Fotoresist beigemengt. Zur Erhöhung des Extintionskoeffizienten wird der Lack zusätzlich mit dem Farbstoff Sudanschwarz eingefärbt. Die vorliegende Suspension wird über Spin-coating auf das Substrat aufgeschleudert. Alternativ zu dem Farbstoff Sudanschwarz können andere geeignete esterlösliche Farbstoffe verwendet werden.

Bei der wesentlich aus einem Fotoresist bestehenden Absorberschicht lassen sich die optischen Eigenschaften in weiten Bereichen durch einfache Maßnahmen, wie z. B. durch Wechsel des Farbstoffs oder Verändern der Konzentration anwendungsspezifisch einstellen. Durch Verwendung eines konventionellen Fotolacks als Trägersubstanz für die Silikatkörnchen und den absorbierten Farbstoff ist der Prozess besonders einfach und kostengünstig.

Die nachfolgende Beschreibung beschreibt anhand der beiliegenden Zeichnungsfiguren nicht beschränkende Ausführungsbeispiele der erfindungsgemäßen Infrarotabsorberschicht in Verbindung mit, einem dafür bevorzugten Herstellungsverfahren, sowie ein Beispiel für eine alternative Absorberschicht welche als wesentlichen Bestandteil ein ORMOCER aufweist.

### Zeichnung

Figur 1 zeigt eine Mikroskopaufnahme einer mit Hilfe eines Positivphotolacks als Trägermaterial hergestellten strukturierten Infrarotabsorberschicht.

Figur 2 zeigt graphisch das Spektrum (Transmission) einer mit Hilfe eines Positivphotolacks als Trägersubstanz hergestellten Infrarotabsorberschicht gemäß Figur 1.

Figur 3 zeigt das Prinzip des Spin-Coating-Prozesses, bei dem eine fließfähige Infrarotabsorberschicht auf ein um eine Achse rotierendes Substrat aufgeschleudert wird.

Die Figuren 4A-4C zeigen Prozessschritte zur Herstellung eines thermischen Sensors, bei dem eine durch Spin-Coating aufgeschleuderte erfindungsgemäße Infrarotabsorberschicht über einer auf oder in einem thermosensitiven Substrat liegenden thermosensitiven Struktur liegt.

### Ausführungsbeispiel

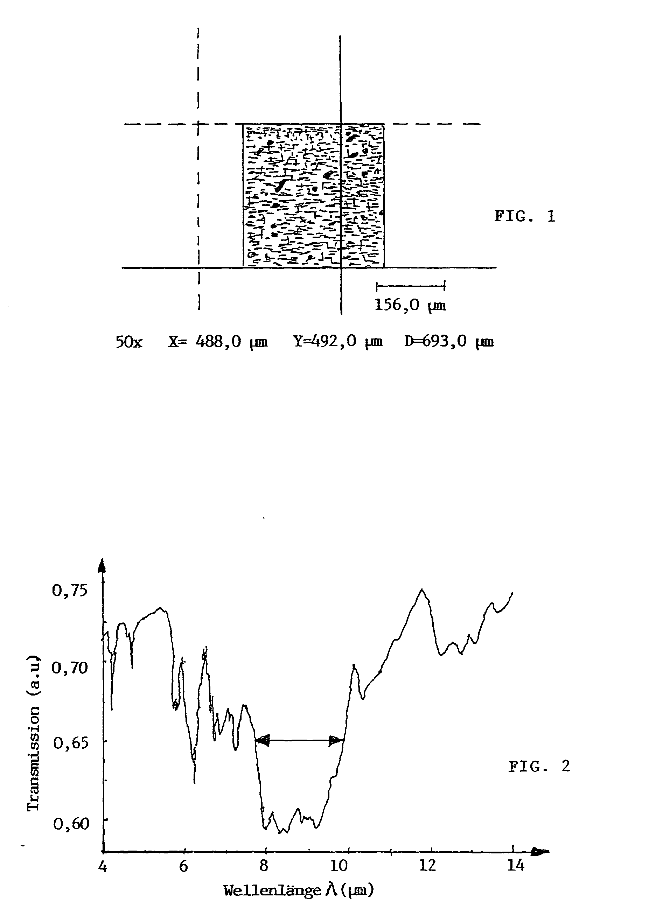

In Figur 1 ist ein mikroskopisch vergrößerter Ausschnitt einer Infrarotabsorberschicht dargestellt, die aus einem handelsüblichen Photoresist (z. B. AZ 81 12) besteht, der in einer Suspension mit Silikaten vorliegt und mit einem dunklen Farbstoff, z. B. Sudanschwarz dotiert ist. Dabei beträgt die mittlere Korngröße der Silikate einige 100 nm. Solche Silikate geringer Korngröße, die durch Sol-Gel-Synthese hergestellt wurden, sind dem Photoresist beigemengt. Der Farbstoff Sudanschwarz, mit dem der Photoresist eingefärbt ist, dient zur Erhöhung des Extintionskoeffizienten.

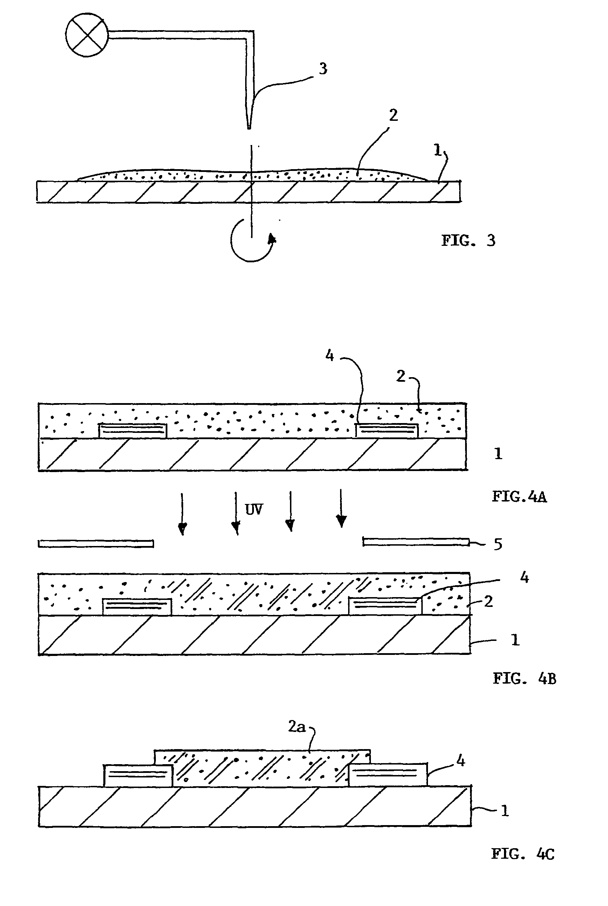

Diese Infrarotabsorberschicht lässt sich mit Hilfe eines Spin-Coating-Verfahrens und nachfolgender Strukturierung durch konventionelle Photolitographie und anschließender Härtung der Absorberschicht bei einer Temperatur von ca. 130° C herstellen, wie dies weiter unten anhand der Figuren 3 und 4A-4C beschrieben wird.

Figur 2 zeigt das mit Hilfe eines Spektrometers aufgenommene Spektrum in Transmission einer Infrarotabsorberschicht, wie sie in Figur 1 gezeigt ist. Es stellt sich ein ausgeprägter Absorptionsbereich für Infrarotstrahlung im Wellenbereich zwischen 8 und 10 µm ein.

Die optischen Eigenschaften der Infrarotabsorberschicht lassen sich in weiten Bereichen durch einfache Maßnahmen, wie z. B. Wechsel des Farbstoffs oder Verändern der Konzentration anwendungsspezifisch einstellen. Durch Verwendung eines solchen herkömmlichen Photoresists als Trägersubstanz für den absorbierenden Farbstoff und die eingelagerten Silikatkörnchen ist der Herstellungsprozess für einen thermischen Sensor besonders einfach und kostengünstig.

Beispiel für eine als wesentlichen Bestandteil ein ORMOCER aufweisende zur Erfindung alternative Infrarotabsorber schicht.

Als absorbierendes Material einer Infrarotabsorberschicht wird erfindungsgemäß ein ORMOCER verwendet, welches aus Si-0-und Estergruppen, deren Banden Strahlung in den Wellenlängenbereichen 5,5-6; 8-10 und 12-13 µm absorbieren und bei denen durch Synthetisieren der Alkoxisilane mit fluorierten Aromaten (organische Gruppen) die Absorption im Bereich von 8-10 µm verstärkt ist. Darüber hinaus kommen weitere Banden der Aromaten hinzu, die Strahlung in den Bereichen 3, 2-3,6; 6 und 13-14 µm absorbieren.

Solche ORMOCERE können mit weiteren organischen und anorganischen Komponenten modifiziert sein, mit denen sie an ihren optimalen Einsatz als Absorberschicht angepasst werden.

Zur weiteren Erhöhung der Absorption kann ein dunkler opaker Farbstoff eingebracht werden.

Weiterhin können Pigmente zur Steigerung der Porösität und der damit verbundenen Erhöhung des Absorptionskoeffizienten eingebracht sein.

Weiterhin können die anorganischen oxidischen Gruppen durch andersartige organische Komponenten zur Steigerung des Absorptionskoeffizienten im gewünschten Wellenlängenbereich modifiziert werden.

Beschreibung eines bevorzugten Herstellungsverfahrens eines thermischen Sensors mit einer erfindungsgemäßen Absorberschicht

Figur 3 zeigt das Aufbringen einer liquiden Schicht 2 durch ein Spin-Coating-Verfahren, bei dem das liquide Medium 2 auf ein in Rotation versetztes Substrat 1 durch eine Düse 3 aufgeschleudert wird. Dieses Spin-Coating-Verfahren ermöglicht eine homogene Schichtbedeckung und führt zu einer sehr guten Wärmeverteilung.

Gemäß Figur 4A ist die Schicht 2 ganzflächig über in oder auf dem Substrat 1 liegenden thermosensitiven Strukturen 4 durch das in Figur 3 gezeigte Spin-Coating-Verfahren aufgebracht worden.

Gemäß Figur 4B wird die Schicht 2 durch eine Maske 5 hindurch mittels UV-Licht belichtet. Dabei wird der belichtete Bereich der Schicht 2 unter Bildung der Absorberschicht 2a (Figur 4C) vernetzt.

Gemäß Figur 4C wird das restliche unvernetzte Polymer mit einem Lösungsmittel entfernt.

Es ist zu bemerken, dass die in den Figuren 4A-4C dargestellten Prozessschritte ein herkömmliches UV-Lithografieverfahren sind.

Schließlich wird die Absorberschicht 2a bei einer Temperatur um 100° C (130° C) ausgehärtet. Bei einer derart niedrigen Temperatur entstehen kaum thermische Belastungen für die darunterliegenden Schichten, wie z. B. die thermosensitiven Strukturen 4.

Die in den Figuren 3, 4A-4C dargestellten Prozessschritte sind sowohl für eine aus einem Photoresist bestehende Infrarotabsorberschicht 2a (gemäß dem Ausführungsbeispiel) als auch für eine als wesentlichen Bestandteil ein ORMOCER aufweisende Infrarotabsorberschicht 2a (gemäß dem Beispiel) verwendbar.

Es ist ferner zu erwähnen, dass alternativ zu der Verwendung als Infrarotabsorberschicht eine erfindungsgemäße Schicht auch für einen Infrarotfilter oder eine optische Schutzschicht verwendbar ist.

## Patentansprüche

1. Infrarotabsorber(2a), insbesondere für thermische Sensoren, der in Form einer Schicht aus einer oder mehreren organischen und/oder anorganischen Verbindungen über einer auf oder in einem Substrat (1) liegenden thermosensitiven Struktur (4) aufgebracht ist, um einfallende Infrarotstrahlung in Wärme umzusetzen, **dadurch gekennzeichnet, dass** die Absorberschicht (2a) aus einem Fotoresist besteht, der in einer Suspension mit Silikatkörnchen vorliegt und mit einem dunklen Farbstoff dotiert ist.

2. Infrarotabsorber(2a) nach Anspruch 1, **dadurch gekennzeichnet, dass** Silikate mit einer mittleren Korngröße von einigen 100 nm dem Fotoresist beigemengt sind.

3. Infrarotabsorber(2a) nach Anspruch 1, **dadurch gekennzeichnet, dass** der Farbstoff ein esterlöslicher Farbstoff ist.

4. Infrarotabsorber (2a) nach Anspruch 3, **dadurch gekennzeichnet, dass** der Farbstoff Sudanschwarz ist.

5. Verfahren zur Herstellung eines thermischen Sensors mit einem Infrarotabsorber (2a) nach einem der Ansprüche 1 bis 4, **gekennzeichnet durch** folgende Schritte:
- auf das Substrat (1), auf dem oder in dem die thermosensitive Struktur (4) liegt, wird die Absorberschicht **durch** Spincoating so aufgeschleudert, dass sie die thermosensitive Struktur (4) überdeckt;
- die aufgeschleuderte Schicht (2) wird über eine Maskentechnik strukturiert und belichtet, so dass die belichteten Bereiche vernetzen;
- die restlichen nicht vernetzten Bereiche der aufgebrachten Absorberschicht (2a) werden entfernt, und
- die vernetzten Bereiche werden bei einer Temperatur im Bereich von etwa 80-150° C ausgehärtet.

6. Verfahren nach Anspruch 5, **dadurch gekennzeichnet, dass** die Belichtung der Absorberschicht (2a) mit UV-Licht ausgeführt wird.

7. Thermischer Sensor, **dadurch gekennzeichnet, dass** er eine Infrarotabsorberschicht (2a) nach einem der Ansprüche 1-4 aufweist.

## Claims

1. Infrared absorber (2a), in particular for thermal sensors, which is applied in the form of a layer of one or more organic and/or inorganic compounds on top of a thermosensitive structure (4), lying on or in a substrate (1), in order to convert incident infrared radiation into heat, **characterized in that** the absorber layer (2a) is made of a photoresist which is present in a suspension with silicate granules and is doped with a dark dye.

2. Infrared absorber (2a) according to Claim 1, **characterized in that** silicates with an average granule size of several 100 nm are added to the photoresist.

3. Infrared absorber (2a) according to Claim 1, **characterized in that** the dye is an ester-soluble dye.

4. Infrared absorber (2a) according to Claim 3, **characterized in that** the dye is Sudan Black.

5. Method for the production of a thermal sensor with an infrared absorber (2a) according to one of Claims 1 to 4, **characterized by** the following steps:
- by spin coating, the absorber layer is spun onto the substrate (1), on or in which the thermosensitive structure (4) lies, in such a way that it covers the thermosensitive structure (4);
- the spun-on layer (2) is structured and exposed by a mask technique, so that the exposed areas crosslink;
- the remaining areas of the absorber layer (2a) which have not crosslinked are removed, and
- the crosslinked areas are cured at a temperature in the range of approximately 80-150°C.

6. Method according to Claim 5, **characterized in that** the exposure of the absorber layer (2a) is conducted with UV light.

7. Thermal sensor, **characterized in that** it has an infrared absorber layer (2a) according to one of Claims 1 to 4.

## Revendications

1. Absorbeur de rayonnement infrarouge (2a), notamment pour des capteurs thermiques se présentant sous la forme d'une couche d'un ou de plusieurs composants organiques et/ou anorganiques, appliquée sur une structure thermosensible (4) sur ou dans un substrat (1), pour convertir le rayonnement infrarouge incident en chaleur,
**caractérisé en ce que**
la couche absorbante (2a) est un photorésist sous la forme d'une suspension avec des grains de silicate et dopée d'un colorant sombre.

2. Absorbeur infrarouge (2a) selon la revendication 1,
**caractérisé en ce que**
les silicates d'une granulométrie moyenne de quelques 100 nm sont mélangés au photorésist.

3. Absorbeur infrarouge (2a) selon la revendication 1,
**caractérisé en ce que**
le colorant est soluble dans un ester.

4. Absorbeur infrarouge (2a) selon la revendication 3,
**caractérisé en ce que**
le colorant est du noir de Soudan.

5. Procédé de fabrication d'un capteur thermique à l'aide d'un absorbeur infrarouge (2a) selon l'une des revendications 1 à 4,
**caractérisé par** les étapes suivantes :
- sur le substrat (1) portant la structure thermosensible ou dans lequel est intégrée la structure thermosensible (4), on applique par projection la couche absorbante par revêtement, par filage, de façon à couvrir la couche thermosensible (4),
- on structure la couche (2) appliquée par projection à l'aide d'une technique de masque et on l'expose de façon à faire réticuler les régions exposées,
- on enlève les régions résiduelles non réticulées de la couche absorbante appliquée (2a) et
- on fait durcir les régions réticulées à une température de l'ordre de 80-150°C.

6. Procédé selon la revendication 5,
**caractérisé en ce qu'**
on expose la couche absorbante (2a) avec de la lumière ultraviolette UV.

7. Capteur thermique
**caractérisé en ce qu'**
il comporte une couche absorbant la lumière infrarouge (2a) selon l'une des revendications 1 à 4.
